# EUROPÄISCHE PATENTSCHRIFT

(11) **EP 1 794 538 B1**
(45) Veröffentlichungstag und Bekanntmachung des Hinweises auf die Patenterteilung: **27.08.2014**
(21) Anmeldenummer: 05793420.0
(22) Anmeldetag: 23.09.2005
(51) Int. Cl.: G01B 3/18

(54) **MESSSCHRAUBE MIT NICHT DREHENDEM MESSBOLZEN**
MICROMETER COMPRISING A NON-ROTATIVE SPINDLE
VIS MICROMETRIQUE A AXE NON ROTATIF

(30) Priorität: 28.09.2004 DE 102004046889
(43) Veröffentlichungstag der Anmeldung: 13.06.2007
(73) Patentinhaber: CARL MAHR HOLDING GMBH, 37073 Göttingen (DE)
(72) Erfinder: WEISSINGER, Hansjörg, 73773 Aichwald (DE)
(74) Vertreter: Rüger, Barthelt & Abel
(86) Internationale Anmeldenummer: PCT/EP2005/010345
(87) Internationale Veröffentlichungsnummer: WO 2006/034827

(56) Entgegenhaltungen:
- EP-A- 1 324 000
- US-A- 1 638 366
- US-A- 3 166 850

## Beschreibung

Die Erfindung betrifft eine Mikrometerschraube, die zum Einstellen oder Messen von Längenmaßen eingerichtet ist oder dient.

Mikrometerschrauben werden beispielsweise als Bügelmessschrauben zur genauen Messung von Durchmessern oder sonstigen eindimensionalen Maßen z.B. auch zur Messung von Gewindedurchmessern und ähnlichem verwendet. Dazu weisen Bügelmessschrauben zwei zwischen einander einen Abstand definierende Messbolzen auf, von denen wenigstens einer beweglich gelagert ist. Mit einem Schraubtrieb kann der Abstand zwischen beiden Messbolzen verändert werden, wobei die Abstandsveränderung von einem Messwerk registriert wird. Eine Mikrometerschraube in der Bauart einer Bügelmessschraube mit einem drehenden Bolzen, der mit einer Gewindespindel einstückig ausgebildet ist, die über einen Schraubtrieb in Drehung versetzt werden kann, um entlang der Längsachse der Mikrometerschraube verschoben zu werden, ist bspw. aus der EP 1 324 000 A1 bekannt.

In der Regel sind die Messbolzen an ihren Stirnseiten entweder schlicht plan geschliffen oder mit einer Einrichtung zum Aufnehmen und Spannen von Messeinsätzen versehen. Diese Messeinsätze weisen beispielsweise Kugeln, Schneiden oder sonstige speziell gestaltete Oberflächen zum Messen von bestimmten Werkstückprofilen auf. Beispielsweise sind für die Gewindemessung schneidenartige Einsätze bekannt, deren Größe auf das jeweilige Gewinde abgestimmt sein muss. Er befindet sich beim Messen zwischen Gewindegängen und liegt an den Flanken des Gewindes an.

In diesem Fall ist es für die Durchführung der Messung hinderlich, wenn der Messbolzen sich bei seiner Axialverstellung dreht.

Des Weiteren kann eine Drehung des Messbolzens zu einem Verschleiß der Endfläche des Messbolzens führen, insbesondere wenn diese mit abrasivem Material in Berührung gebracht wird. Werden beispielsweise abrasive Materialien vermessen führt dies bei drehendem Messbolzen zu einem unerwünschten Verschleiß der Flächen. Schon geringe Flächenbeschädigungen können zu Messfehlern führen.

Ein drehender Messbolzen kann auch bei der Messung oder Prüfung von empfindlichen Materialien oder Oberflächen hinderlich sein. Beispielsweise können scharfe Kanten eines Messbolzens auf gebürsteten oder sonstwie optisch ansprechend gestalteten Oberflächen Marken hinterlassen oder empfindliche Oberflächen, beispielsweise lackierte Oberflächen, weiche Oberflächen oder dergleichen, mit kleinen Schnitten beschädigen. Auch dies ist abzulehnen.

Daraus erwächst das Bestreben nach einer Messschraube mit nicht drehendem Messbolzen. Bestehende Mikrometerschrauben, die sich im Fertigungsprogramm befinden und einen drehenden Messbolzen aufweisen, legen den Außendurchmesser des Messbolzens fest.

US 3 166 850 A beschreibt eine Messschraube mit einer Messspindel, die in einen unverdrehbar, axial verschiebbar gelagerten Messbolzen und eine Gewindespindel unterteilt ist, die durch eine Kupplungseinrichtung mit dem Messbolzen drehbar verbunden ist, wobei der Messbolzen an seinem axialen Ende mit einer axialen Bohrung mit Innengewinde versehen ist. Zur Ausbildung der Kupplungseinrichtung ist der Messbolzen mit einem einen verminderten Durchmesser aufweisenden Hals versehen, der sich ausgehend von einer Schulter bis zu einem ein Außengewinde tragenden Endabschnitt erstreckt und in eine Axialbohrung der Gewindespindel hineinragt. Das Außengewinde ist in ein Innengewinde eines Ringes eingeschraubt, der durch eine in die axiale Bohrung des Messbolzens eingeschraubte Schraube in Stellung gehalten ist. Zwischen der Schulter des Messbolzens und dem Ring ist eine Muffe eingefügt, die den Messbolzen mit geringem Spiel umgibt und an der Gewindespindel fixiert ist.

US 1 638 366 A beschreibt eine Messschraube mit einem axial verschiebbaren Messbolzen, der über eine Kupplungseinrichtung mit einer Gewindespindel relativ verdrehbar verbunden ist. Hierzu ist der Messbolzen in einer Hülse, in die auch ein Ende der Gewindespindel eingreift, verschiebbar gelagert und durch einen Stift, der in eine axiale Nut des Messbolzens eingreift, am Drehen gehindert. Eine Feder spannt den Messbolzen ins Innere der Messschraube vor, um ihn mit der Gewindespindel in Kontakt zu halten. Eine zwischen dem Messbolzen und der Gewindespindel eingefügte Kugel sorgt für einen reibungsarmen Kontakt zwischen diesen, wenn der Messbolzen durch Drehen der Gewindespindel axial verschoben wird.

Bei der Herstellung von Messschrauben unterschiedlichen Typs, beispielsweise mit drehendem Messbolzen und mit nicht drehendem Messbolzen, wird eine möglichst große Zahl von Gleichteilen angestrebt. Es wird deshalb nach einer Lösung für eine Messschraube mit nicht drehendem Messbolzen gesucht, die sich in ansonsten übliche Messschraubensysteme mit drehendem Messbolzen integrieren lassen.

Diese Aufgabe wird mit einer Messschraube nach Anspruch 1 und mit einem Messschraubenbausystem nach Anspruch 18 gelöst.

Die erfindungsgemäße Messschraube weist eine Messspindel auf, die in einen unverdrehbar gehaltenen, dabei aber axial verschiebbar gelagerten Messbolzen und eine Gewindespindel unterteilt ist, die axial hintereinander angeordnet und über eine Kupplungseinrichtung miteinander verbunden sind. Die Kupplungseinrichtung gestattet eine Relativverdrehung der Gewindespindel gegen den Messbolzen, wobei sie jedoch den Messbolzen und die Gewindespindel axial fest aneinander bindet.

Gemäß der Erfindung ist zur Ausbildung der Kupplungseinrichtung der Messbolzen mit einer axialen Gewindebohrung und die Gewindespindel mit einer Ringnut versehen, wobei der entsprechende Teil der Gewindespindel einen Durchmesser aufweist, der so gering ist, dass der betreffende Teil in die Gewindebohrung passt. In der Ringnut sitzt eine seitlich mit einem Schlitz versehene Gewindebuchse, die in die Gewindebohrung eingeschraubt ist und somit den Messbolzen an der Gewindespindel sichert. Alternativ kann bei einer allerdings weniger bevorzugten Ausführungsform die Anordnung auch umgekehrt getroffen sein, d.h. die Gewindebohrung ist dann in der Gewindespindel vorgesehen, während der Fortsatz mit der Ringnut an dem Messbolzen ausgebildet ist.

Der Messbolzen und die Gewindespindel weisen vorzugsweise den gleichen Außendurchmesser auf, so dass die Gesamtanordnung eine herkömmliche, durchgehende und drehende Messspindel ersetzen kann. Die einzige an der ansonsten herkömmlich ausgebildeten Messschraube vorzunehmende Änderung ist die Vorsehung einer Verdrehsicherung für den axial verschiebbaren Messbolzen. Diese Verdrehsicherung kann beispielsweise in einer radial zu dem Messbolzen angeordneten Schraube bestehen, deren Spitze in eine in dem Messbolzen vorgesehene Axialnut greift. Der Antrieb der Messspindel sowie das der Messspindel zugeordnete Messwerk können jedoch vollkommen unverändert bleiben. Selbst der Grundkörper für die Bügelmessschraube kann evtl. bis auf die Aufnahmebohrung für die Verdrehsicherung unverändert bleiben. Es kann auch grundsätzlich der gleiche Grundkörper verwendet werden, wenn dessen Aufnahmebohrung im Falle des Nichtgebrauchs (bei drehender Messspindel) unbenutzt bleibt oder durch einen Blindstopfen verschlossen wird.

Die Gewindebuchse kann nachträglich an der Ringnut befestigt werden. In einer ersten Ausführungsform ist die Gewindebuchse einstückig aufgebaut und weist einen seitlichen Schlitz auf, der es gestattet, sie über den zylindrischen Abschnitt des Messbolzens bzw. der Gewindespindel zu schieben, der den Boden der genannten Ringnut ausbildet. Dabei kann die Weite des Schlitzes etwa dem Durchmesser des zylindrischen Abschnitts entsprechen oder geringfügig geringer sein, so dass sich die Gewindebuchse rastend in der Ringnut einfindet. In dieser sitzt sie dann jedoch mit reichlich radialem und vorzugsweise auch axialem Spiel. Die Gewindebuchse kann aus Metall oder Kunststoff bestehen. Alternativ kann die Gewindebuchse (wiederum aus Metall oder Kunststoff) aus zwei zueinander passenden schalenartigen Hälften bestehen, die an längs verlaufenden Fugen aneinander passen. Diese Hälften der längs geteilten Gewindebuchse können dann in die Ringnut eingelegt und gemeinsam in die Gewindebohrung des Messbolzens (bzw. der Gewindespindel) eingeschraubt werden. Die Hälften können getrennt gefertigt oder Teile einer einstückig gefertigten Gewindebuchse sein, die dann beispielsweise längs vorgegebener Bruchlinien aufgetrennt wird. Die Bruchlinien werden beispielsweise durch Sollbruchstellen, d.h. vorgefertigte Schwachstellen, festgelegt und sichern mit ihrer Rauheit eine eindeutige Positionierung der Gewindebuchsenhälften zueinander.

Weiter alternativ kann die Gewindebuchse durch ein profiliertes Flachteil gebildet sein, das um den Boden der Ringnut herumgebogen wird. Weiter alternativ ist es möglich, die Gewindebuchse aus einem federnden Material, beispielsweise aus einem federnden Kunststoff, zu fertigen, wobei die Gewindebuchse dann wiederum einteilig und längs geschlitzt ausgebildet ist. Der Schlitz kann deutlich enger sein als der Durchmesser des Nutbodens. Es ist auch möglich, dass die Federwirkung so groß bemessen wird, dass sich der Schlitz auf eine längs verlaufende Trennfuge reduziert, an der die einander gegenüberliegenden Schlitzwangen der Gewindebuchse aneinander anliegen.

Auf der Gewindebuchse sitzt vorzugsweise eine Kontermutter, die gegen die Stirnseite des mit der Gewindebohrung versehenen Messbolzens festgezogen wird. Bei der umgekehrten Anordnung, bei der die Gewindebohrung in der Messspindel sitzt, wird die Kontermutter gegen die Messspindel festgespannt. Durch entsprechende Einstellung der Position der Gewindebuchse in der Gewindebohrung und Fixierung dieser Lage durch Festziehen der Kontermutter, kann eine nahezu spielfreie Anbindung des Messbolzens an die Gewindespindel gelingen. Dabei bleibt die Gewindespindel frei drehbar gegen den Messbolzen.

Der Messbolzen ist vorzugsweise mit einer axialen Bohrung versehen, in der das genannte Gewinde für die Gewindebuchse ausgebildet ist. Die Bohrung ist wiederum vorzugsweise als Durchgangsbohrung ausgebildet. Sie mündet somit an der freien Stirnfläche des Messbolzens und kann dort zur Aufnahme von Schäften verschiedener Messeinsätze dienen. Der Genauigkeit der erfindungsgemäßen Messschraube besonders zuträglich ist es, wenn der Messeinsatz in direktem oder indirektem Kontakt mit einem Fortsatz der Messspindel steht. Dieser Kontakt kann beispielsweise dadurch zustande kommen, dass der betreffende, sich in die Durchgangsbohrung hinein erstreckende Fortsatz der Gewindespindel eine entsprechende stirnseitige Bezugsfläche aufweist, an der ein Schaft eines Messeinsatzes anliegen kann. Bei einer verfeinerten Ausführungsform wird jedoch kein direkter Kontakt zwischen womöglich planen Endflächen des Schafts des Messeinsatzes und des Fortsatzes der Messspindel sondern ein indirekter Kontakt über einen Vermittlungskörper, beispielsweise eine Kugel, hergestellt. Diese kann in die Durchgangsbohrung eingepresst sein und einerseits eine Anlage für die Stirnseite des Fortsatzes der Gewindespindel und andererseits für die Stirnseite des Schafts des Messeinsatzes bilden. Um die Position der Kugel in der Durchgangsbohrung eindeutig zu definieren ist es vorteilhaft, diese an einer Ringschulter abzustützen oder anderweitig axial fest zu sichern. Vorzugsweise weist die Stufenbohrung zu der Gewindebohrung hin einen weiteren Durchmesser und zu dem Messeinsatz hin einen engeren Durchmesser auf. Damit stützt sich die Stirnseite des Fortsatzes der Gewindespindel an der fest eingepressten und zusätzlich durch die Ringschulter axial gesicherten Kugel ab, was wiederum der spielfreien Sicherung der Gewindespindel an dem Messbolzen zugute kommt.

Weitere Einzelheiten vorteilhafter Ausführungsformen der Erfindung ergeben sich aus der Zeichnung, der zugehörigen Beschreibung oder aus Ansprüchen. In der Zeichnung ist ein Ausführungsbeispiel der Erfindung veranschaulicht. Es zeigen:
- Figur 1: eine Bügelmesseinrichtung mit einer erfindungsgemäßen Messschraube in einer Seitenansicht,
- Figur 2: die Bügelmesseinrichtung nach Figur 1, geschnitten entlang der Schnittlinie A-A in Figur 1,

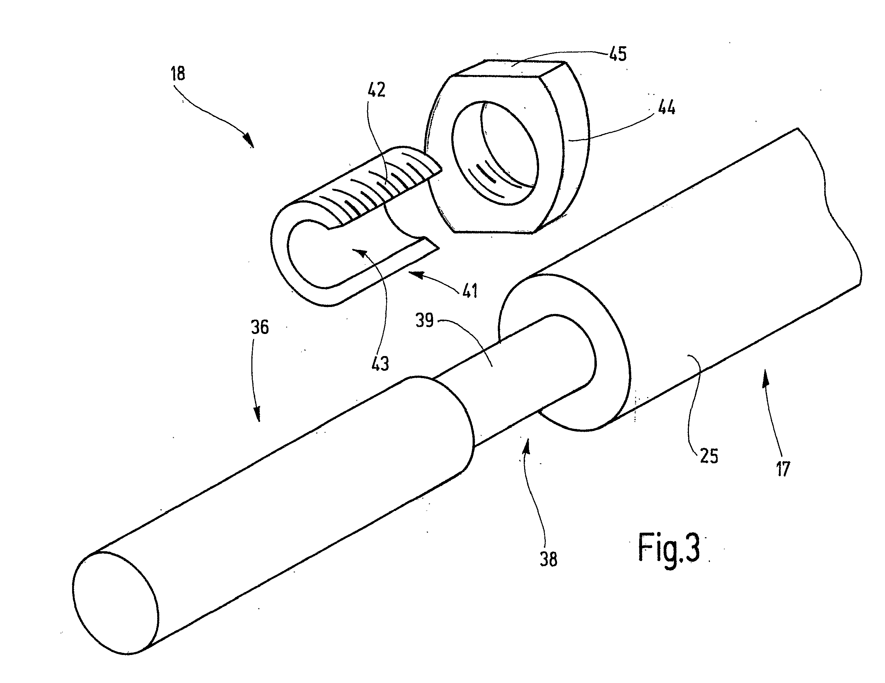

- Figur 3: einen zu dem Messbolzen der Messschraube gehörigen Gewindebolzen mit Kupplungseinrichtung in perspektivischer Explosionsdarstellung,
- Figur 4: die Messspindel mit Gewindespindel und Messbolzen und Kupplungseinrichtung in perspektivischer, teilweise geschnittener Explosionsdarstellung,
- Figur 5: die Messspindel in längs geschnittener Darstellung und
- Figur 6: die Messspindel quer geschnitten im Bereich ihrer Kupplungseinrichtung.

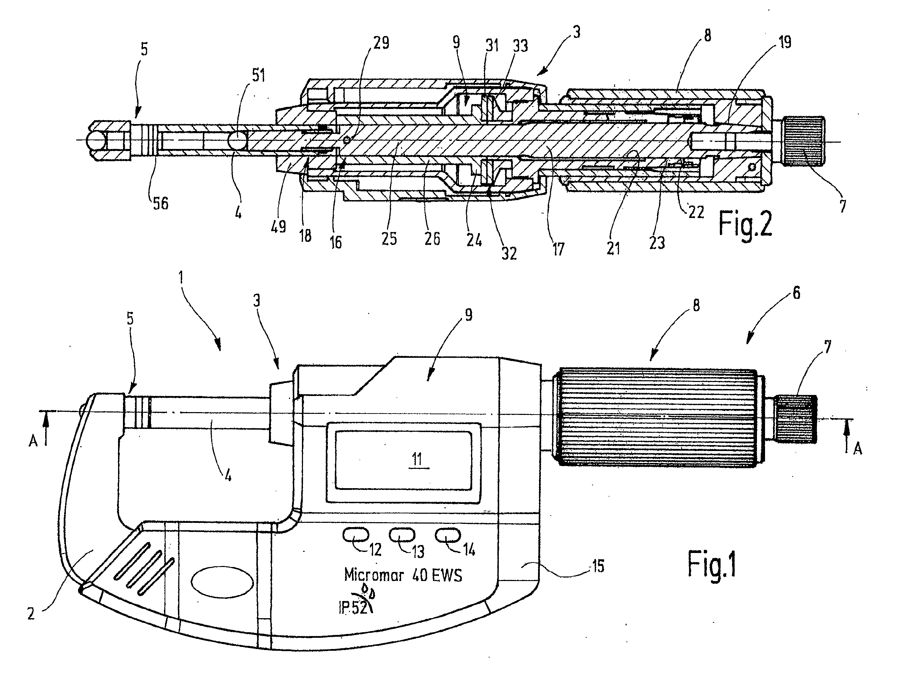

In Figur 1 ist eine Bügelmesseinrichtung 1 veranschaulicht, zu der ein bügelförmiger Grundkörper 2, eine Messschraube 3 mit Messbolzen 4 und ein fluchtend gegenüberliegend angeordneter Gegenmessbolzen 5 gehören. Der Gegenmessbolzen 5 und der Messbolzen 4 sind an einander gegenüberliegenden Schenkeln des Grundkörpers 2 gehalten, die zwischeneinander eine maulartige Öffnung definieren. Während der Gegenmessbolzen 5 fest an dem Grundkörper 2 verankert ist, ist der Messbolzen 4 bzgl. seiner Längsrichtung verstellbar. Zur Verstellung dient ein Schraubtrieb, der über eine Handhabe 6 betätigt wird. Zu dieser gehören ein zylindrischer, gerändelter Griff 7 kleinen Durchmessers und ein ebenfalls zylindrischer gerändelter Griff 8 großen Durchmessers. Entsprechend der Drehung des Griffs 7 oder 8 wird der Messbolzen 4 axial von dem Gegenmessbolzen 5 weg oder auf diesen zu bewegt. Der Griff 8 arbeitet über eine Kraftbegrenzungseinrichtung, wie beispielsweise eine geeignete Ratsche auf den Schraubtrieb.

An dem Grundkörper 2 ist außerdem eine Messeinrichtung 9 gehalten, deren Display 11 beispielsweise als LCD-Display ausgebildet ist und dazu dient, die axiale Verschiebung des Messbolzens 4 digital mit hoher Genauigkeit anzuzeigen. Bedienelemente 12, 13, 14, die wie die Messeinrichtung 9 an einem an dem Grundkörper 2 gehaltenen Gehäuse 15 angeordnet sind, dienen der Nullung sowie der Umschaltung zwischen verschiedenen Längeneinheiten.

Wie Figur 2 veranschaulicht, enthält die Messschraube 3 eine Messspindel 16, zu der sowohl der Messbolzen 4 als auch eine Gewindespindel 17 gehören. Diese sind untereinander durch eine an späterer Stelle genauer erläuterte Kupplungseinrichtung 18 verbunden. Die Gewindespindel 17 ist in der Messschraube 3 drehbar und axial verschiebbar gelagert. Sie weist eine zylinderförmige Grundform auf und ist an ihrem hinteren Ende mit einem kegelförmigen Ansatz 19 versehen, an dem die Griffe 7, 8 befestigt sind. An ihrem sich an dem Ansatz 19 anschließenden Ende trägt sie außerdem ein Außengewinde 21, das mit einem Innengewinde 22 in Eingriff steht, das an einem bzgl. des Grundkörpers 2 ortsfest gehaltenen rohrförmigen Fortsatz 23 ausgebildet ist. Entsprechend verschiebt sich die Gewindespindel 17 entsprechend ihrer Drehung in dem Fortsatz 23 in Längsrichtung.

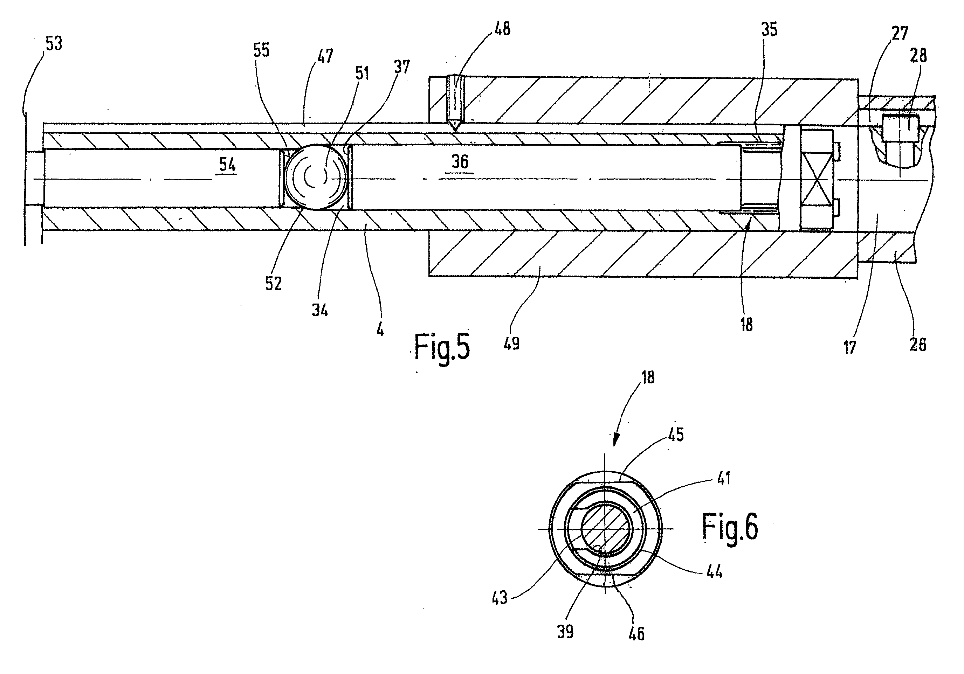

Zur Erfassung der Axialverschiebung der Gewindespindel 17 dient die Messeinrichtung 9, zu der eine mit einem Flansch 24 versehene, auf einem glatten zylindrischen Abschnitt 25 der Gewindespindel 17 sitzende Buchse 26 gehört. Diese weist, wie aus Figur 5 ersichtlich, eine längs verlaufende Nut 27 auf, die an ihrer Innenseite ausgebildet ist und in die ein als Nutenstein dienender Kopf 28 einer Schraube eingreift, die radial in eine Gewindebohrung 29 (Figur 2) der Gewindespindel 17 eingeschraubt ist. Damit ist die Buchse 26 drehfest mit der Gewindespindel 17 verbunden. An den Flansch 24 ist eine Hälfte 31 eines Winkelgebers 32 gehalten, die unmittelbar einer zweiten, zu dem Winkelgeber 32 gehörigen Hälfte 33 gegenüber liegt, die ortsfest angeordnet ist. Die Verdrehung der Hälften 31, 33 gegeneinander wird von einer elektronischen Überwachungs- und Auswerteschaltung erfasst und in Längenmesswerte umgesetzt, die auf dem Display 11 angezeigt werden.

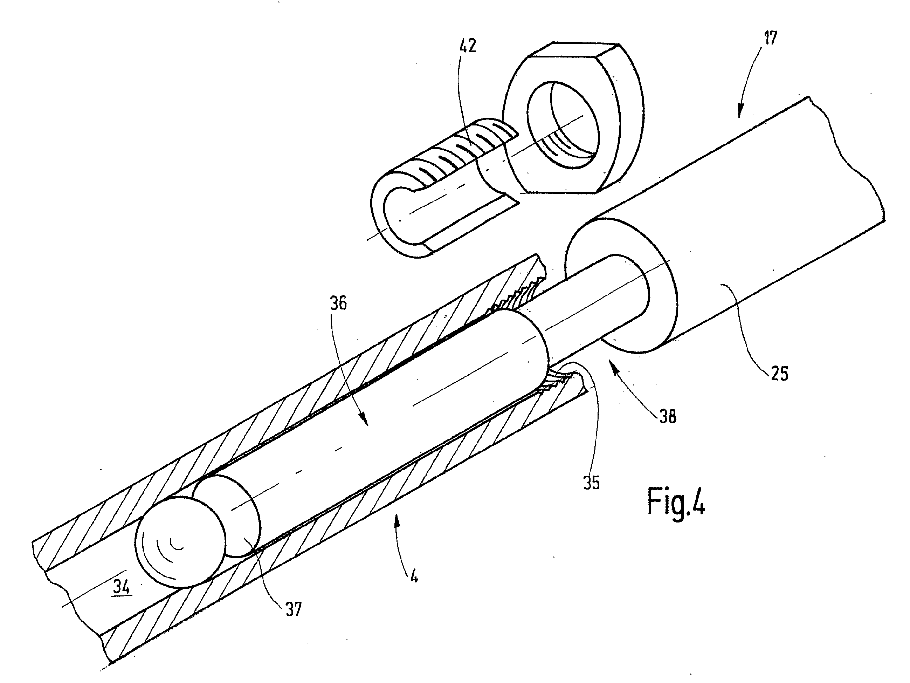

Der Messbolzen 4 ist, wie aus den Figuren 4 und 5 hervorgeht, vorzugsweise rohrartig ausgebildet. Er weist eine zylindrische Außenform auf und ist mit einer Bohrung 34 versehen, die als vorzugsweise gestufte Durchgangsbohrung ausgebildet ist. An dem der Gewindespindel 17 zugewandten Ende der Bohrung 34 ist ein Innengewinde 35 ausgebildet, das zum Ankoppeln des Messbolzens 4 an die Gewindespindel 17 dient und somit Teil der Kupplungseinrichtung 18 ist. Das Innengewinde 35 ist insbesondere aus Figur 4 ersichtlich.

Die Gewindespindel 17 ist mit einem Fortsatz 36 versehen, der sich koaxial zu ihr in die Bohrung 34 hinein erstreckt und in dieser mit Spiel sitzt. Der Fortsatz 36 ist mit einer planen Stirnfläche 37 versehen und sitzt mit seinem zylindrischen Mantel mit Spiel in der Bohrung 34. Der Durchmesser des Fortsatzes 36 ist deutlich geringer als der des Abschnitts 25 der Gewindespindel 17. Unmittelbar im Anschluss an den Abschnitt 25 ist gewissermaßen an dem Anfang des Fortsatzes 36 eine breite Ringnut 38 mit vorzugsweise zylindrischem Boden 39 ausgebildet. Diese Ringnut 38 dient der Verankerung einer Gewindebuchse 41, die gleichfalls Teil der Kupplungseinrichtung 18 ist. Die Gewindebuchse 41 weist ein Außengewinde 42 auf, das zu dem Innengewinde 35 passt, so dass der Messbolzen 4 auf die Gewindebuchse 41 aufgeschraubt werden kann, wenn diese in der Ringnut 38 sitzt.

Die Gewindebuchse 41 weist einen Innendurchmesser auf, der etwas größer ist als der Durchmesser des Bodens 39. Außerdem ist die Gewindebuchse 41 etwas kürzer als die axiale Erstreckung der Ringnut 38, d.h. als die Distanz zwischen den ringförmigen seitlichen Flanken der Ringnut 38. Seitlich ist die Gewindebuchse 41 mit einem Schlitz 43 versehen, der so groß ist, dass die Gewindebuchse 41 seitlich in die Ringnut 38 eingesetzt werden kann. Figur 6 veranschaulicht dies. Die Weite des Schlitzes 43 entspricht somit dem Durchmesser des Bodens 39. Im bevorzugten Fall ist die Schlitzweite geringfügig geringer als der Durchmesser des Bodens 39, so dass die Gewindebuchse 41 rastend in die Ringnut 38 eingesetzt werden kann. Soll auf die Rastwirkung verzichtet werden, kann der Schlitz 43 auch weiter bemessen sein.

Zu der Kupplungseinrichtung 18 gehört zumindest optional außerdem eine Kontermutter 44, die zu der Gewindebuchse 41 passt. Die Kontermutter 44 weist einen Außendurchmesser auf, der geringer ist als der des Abschnitts 25. Ein oder mehrere Facetten 45, 46 an dem Außenumfang der Kontermutter 44 gestatten das Ansetzen eines Werkzeugs, um die Kontermutter 44 gegen die Stirnseite des Messbolzens 4 festziehen zu können.

Der Messbolzen 4 trägt an seiner Außenseite eine längs verlaufende Nut 47, in die die Spitze einer Schraube 48 greift. Diese dient der Verdrehsicherung, so dass der Messbolzen 4 zwar längs verschiebbar aber nicht drehbar in dem Grundkörper 2 oder einem entsprechenden, aus Figur 2 ersichtlichen, Führungskörper 49 sitzt.

Wie aus Figur 5 ersichtlich, ist in der Bohrung 34 eine Kugel 51 angeordnet, an der sich einerseits die Stirnfläche 37 des Fortsatzes 36 abstützt und die ihrerseits an einer Stufe 52 ruht, an der die Bohrung 34 ihren Durchmesser reduziert. Die Kugel 51 ist in die Bohrung 34 eingepresst.

Dem Messbolzen 4 ist ein Messeinsatz 53 zugeordnet, der einen Zylinderschaft 54 aufweist. Der Zylinderschaft 54 passt mit geringem Spiel in die Bohrung 34. Er weist eine vorzugsweise ebene Stirnfläche 55 auf, mit der er an der Kugel 51 anliegt. Die Kugel 51 vermittelt somit präzise die Axialposition zwischen dem Messeinsatz 53 und der Schraubspindel 17. Der Messeinsatz 53 liegt dazu nicht an der Stirnseite des Messbolzens 4 an.

Bei der in Figur 2 veranschaulichten Ausführungsform der Bügelmesseinrichtung 1 handelt es sich um eine Messschraube 3 mit plan abgeschlossenem Messbolzen 4 und Gegenmessbolzen 5. Der entsprechende, in den Messbolzen 4 eingesetzte Messeinsatz 56 liegt an der Stirnseite des Messbolzens 4 an. Sein Schaft hat keinen Kontakt mit der Kugel 51.

Die Montage der Messspindel 16 geht folgendermaßen:
Zunächst wird die Gewindespindel 17 mit der Gewindebuchse 41 versehen, indem diese in die Ringnut 38 eingesetzt wird. Sodann wird die Gewindebuchse 41 drehfest gehalten und die Kontermutter 44 aufgeschraubt. Als nächstes wird der Messbolzen 4 auf die Gewindebuchse 41 aufgeschraubt bis die Gewindespindel 17 spielarm an dem Messbolzen 4 gehalten ist. Sie sitzt dann spielarm zwischen der Gewindebuchse 41 und der Kugel 51. In diesem Zustand wird die Kontermutter 44 festgezogen. Es entsteht somit die außen insgesamt zylindrische Messspindel 16 konstanten Durchmessers, deren vorderer drehfester Teil durch den Messbolzen 4 und deren hinterer drehbarer Teil durch die Gewindespindel 17 gebildet wird. Im Betrieb wird der Messbolzen 4 durch die Schraube 48 drehfest gesichert, die so gemeinsam mit der Nut 47 eine Verdrehsicherungseinrichtung bildet. Die Messeinrichtung 9 sowie der Gewindetrieb sind wie bei einer Messschraube mit drehender Messspindel ausgebildet. Die erfindungsgemäß geteilte Messspindel 16 kann bedarfsweise durch eine durchgehende starre Messspindel ersetzt werden. Es wird lediglich die Schraube 48 entfernt, um die Messschraube 3 auf eine Messschraube mit drehender Spindel umzurüsten.

Die erfindungsgemäße Messschraube weist eine geteilte Messspindel 16 auf. Ihr vorderer, den Messbolzen 4 bildender Teil ist drehfest in einem Führungselement gesichert. Der hintere, als Gewindespindel ausgebildete Abschnitt weist den gleichen Durchmesser auf. Er ist axial fest, dabei aber drehbar an dem Messbolzen 4 angebunden. Diese Messspindel 16 kann eine herkömmliche, starre, durchgehende Messspindel einer Messschraube ersetzen und führt somit ohne wesentliche konstruktive Änderung zu einer Messschraube mit nicht drehender Messspindel.

## Patentansprüche

1. Messschraube (3)
mit einer Messspindel (16), die in einen unverdrehbar, axial verschiebbar gelagerten Messbolzen (4) und eine Gewindespindel (17) unterteilt ist, die durch eine Kupplungseinrichtung (18) mit dem Messbolzen (4) drehbar verbunden ist,
wobei zur Ausbildung der Kupplungseinrichtung (18) die Gewindespindel (17) oder der Messbolzen (4) mit einer axialen Bohrung (34) mit Innengewinde (35) und der Messbolzen (4) oder die Gewindespindel (17) mit einer Ringnut (38) versehen ist, in der eine seitlich mit einem Schlitz (43) versehene Gewindebuchse (41) sitzt, die in das Gewinde (35) eingeschraubt ist.

2. Messschraube nach Anspruch 1, **dadurch gekennzeichnet, dass** die Gewindespindel (17) mit einem drehfest und axial bezüglich eines Gestells unverschiebbar gehaltenen Gewinde (22) im Eingriff steht.

3. Messschraube nach Anspruch 1 oder 2, **dadurch gekennzeichnet, dass** die Gewindespindel (17) mit einer Messeinrichtung (9) zur Erfassung der Umdrehungen der Gewindespindel (17) verbunden ist.

4. Messschraube nach Anspruch 1, **dadurch gekennzeichnet, dass** der Messbolzen (4) eine axiale Bohrung (34) aufweist.

5. Messschraube nach Anspruch 4, **dadurch gekennzeichnet, dass** die Bohrung (34) eine Durchgangsbohrung mit einer Stufe (52) ist.

6. Messschraube nach Anspruch 5, **dadurch gekennzeichnet, dass** in die Bohrung (34) eine Kugel (51) eingesetzt ist, die sich an der Stufe (52) abstützt.

7. Messschraube nach Anspruch 6, **dadurch gekennzeichnet, dass** die Kugel (51) eine Bezugsfläche für vorzugsweise auswechselbare Messeinsätze (53) bildet.

8. Messschraube nach Anspruch 4, **dadurch gekennzeichnet, dass** die Bohrung (34) an ihrem der Gewindespindel (17) zugewandten Ende mit einem Innengewinde (35) versehen ist.

9. Messschraube nach Anspruch 1, **dadurch gekennzeichnet, dass** die Gewindespindel (17) im Anschluss an den Messbolzen (4) einen Außendurchmesser aufweist, der mit dem des Messbolzens (4) übereinstimmt.

10. Messschraube nach Anspruch 4, **dadurch gekennzeichnet, dass** die Gewindespindel (17) einen axialen Fortsatz (36) aufweist, der sich in die Bohrung (34) hinein erstreckt.

11. Messschraube nach Anspruch 10, **dadurch gekennzeichnet, dass** der Fortsatz (34) an der Kugel (51) anliegt.

12. Messschraube nach Anspruch 10, **dadurch gekennzeichnet, dass** die Ringnut (38) an dem Fortsatz (34) ausgebildet ist.

13. Messschraube nach Anspruch 1, **dadurch gekennzeichnet, dass** der Schlitz (43) der Gewindebuchse (41) eine Weite aufweist, die ein seitliches Einsetzen der Gewindebuchse (41) in die Ringnut (38) gestattet.

14. Messschraube nach Anspruch 13, **dadurch gekennzeichnet, dass** der Schlitz (43) eine in Umfangsrichtung gemessene Weite aufweist, die so groß ist wie der Innendurchmesser der Ringnut (38).

15. Messschraube nach Anspruch 13, **dadurch gekennzeichnet, dass** der Schlitz (43) eine in Umfangsrichtung gemessene Weite aufweist, die etwas geringer ist als der Innendurchmesser der Ringnut (38), um einen Rastsitz der Gewindebuchse (41) in der Ringnut (38) zu ermöglichen.

16. Messschraube nach Anspruch 1, **dadurch gekennzeichnet, dass** die Gewindebuchse (41) längs geteilt ist.

17. Messschraube nach Anspruch 1, **dadurch gekennzeichnet, dass** auf der Gewindebuchse (41) eine Kontermutter (44) angeordnet ist.

18. Messschraubenbausystem
mit einer Messspindel, die einen unverdrehbar zu lagernden Messbolzen (4) und eine an diesen angeschlossene Gewindespindel (17) aufweist, die durch eine Kupplungseinrichtung (18) mit dem Messbolzen (4) drehbar verbunden ist,
wobei zur Ausbildung der Kupplungseinrichtung (18) die Gewindespindel (17) oder der Messbolzen (4) mit einer axialen Bohrung (34) mit Innengewinde (35) und der Messbolzen (4) oder die Gewindespindel (17) mit einer Ringnut (38) versehen ist, in der eine seitlich mit einem Schlitz (43) versehene Gewindebuchse (41) sitzt, die in das Gewinde (35) eingeschraubt ist,
mit einer Messspindel, deren Messbolzen (4) und Gewindespindel (17) starr miteinander verbunden sind, und
mit einem Grundkörper (2), an dem ein Messsystem zur Erfassung einer Drehung der Messspindel angeordnet ist und der eine Durchgangsbohrung zur Aufnahme wahlweise einer der oben genannten Messspindeln aufweist.

19. Messschraubenbausystem nach Anspruch 18, **dadurch gekennzeichnet, dass** der unverdrehbar gelagerte bzw. zu lagernde Messbolzen (4) und die Gewindespindel (17) den gleichen Außendurchmesser aufweisen und axial zueinander fluchtend, längs aneinander anschließend angeordnet sind.

## Claims

1. Micrometer (3)
with a spindle (16), which is subdivided into a screw (4) mounted to be non-rotatable and axially displaceable and a threaded spindle (17), which is rotatably connected to the screw (4) by means of a coupling device (18),
wherein for configuration of the coupling device (18) the threaded spindle (17) or the screw (4) is provided with an axial bore (34) with internal thread (35) and the screw (4) or threaded spindle (17) is provided laterally with an annular groove (38), in which sits a threaded bush (41), which is provided with a slot (43) and is screwed into the thread (35).

2. Micrometer according to claim 1, **characterised in that** the threaded spindle (17) is engaged with a rotationally fixed thread (22), which is held to be non-displaceable axially relative to a frame.

3. Micrometer according to claim 1 or 2, **characterised in that** the threaded spindle (17) is connected to a measuring device (9) for detection of the rotations of the threaded spindle (17).

4. Micrometer according to claim 1, **characterised in that** the screw (4) has an axial bore (34).

5. Micrometer according to claim 4, **characterised in that** the bore (34) is a through bore with a step (52).

6. Micrometer according to claim 5, **characterised in that** a ball (51) is inserted into the bore (34) and rests against the step (52).

7. Micrometer according to claim 6, **characterised in that** the ball (51) forms a reference surface for preferably replaceable metering inserts (53).

8. Micrometer according to claim 4, **characterised in that** the bore (34) is provided with an internal thread (35) at its end facing the threaded spindle (17).

9. Micrometer according to claim 1, **characterised in that** adjoining the screw (4) the threaded spindle (17) has an outside diameter, which is the same as that of the screw (4).

10. Micrometer according to claim 4, **characterised in that** the threaded spindle (17) has an axial extension (36), which extends into the bore (34).

11. Micrometer according to claim 10, **characterised in that** the extension (34) abuts against the ball (51).

12. Micrometer according to claim 10, **characterised in that** the annular groove (38) is configured on the extension (34).

13. Micrometer according to claim 1, **characterised in that** the slot (43) of the threaded bush (41) has a width, which allows a lateral insertion of the threaded bush (41) into the annular groove (38).

14. Micrometer according to claim 13, **characterised in that** the slot (43) has a width measured in peripheral direction that is as large as the inside diameter of the annular groove (38).

15. Micrometer according to claim 13, **characterised in that** the slot (43) has a width measured in peripheral direction that is slightly smaller than the inside diameter of the annular groove (38) to enable a snap-in engagement of the threaded bush (41) in the annular groove (38).

16. Micrometer according to claim 1, **characterised in that** the threaded bush (41) is divided lengthwise.

17. Micrometer according to claim 1, **characterised in that** a counternut (44) is arranged on the threaded bush (41).

18. Micrometer assembly system
with a spindle, which has a screw (4) to be mounted non-rotatably and a threaded spindle (17) connected to this, which is rotatably connected to the screw (4) by means of a coupling device (18),
wherein for configuration of the coupling device (18) the threaded spindle (17) or the screw (4) is provided with an axial bore (34) with internal thread (35) and the screw (4) or threaded spindle (17) is provided with an annular groove (38), in which sits a threaded bush (41), which is provided laterally with a slot (43) and is screwed into the thread (35),
with a spindle, the screw (4) and threaded spindle (17) of which are connected rigidly to one another, and
with a base body (2), on which a measurement system is arranged for detection of a rotation of the spindle and which has a through bore to selectively receive one of the abovementioned spindles.

19. Micrometer assembly system according to claim 18, **characterised in that** the screw (4) mounted or to be mounted to be non-rotatable and the threaded spindle (17) have the same outside diameter and are arranged in axial alignment with one another to longitudinally adjoin one another.

## Revendications

1. Vis micrométrique (3)
comprenant une tige de mesure (16) qui est divisée en un axe de mesure (4), monté sans possibilité de rotation et à coulissement axial, et en une tige filetée (17) reliée avec possibilité de rotation à l'axe de mesure (4) par l'intermédiaire d'un dispositif d'accouplement (18),
dans laquelle, pour réaliser le dispositif d'accouplement (18), la tige filetée (17) ou l'axe de mesure (4) est pourvu d'un perçage axial (34) à filetage intérieur (35), et l'axe de mesure (4) ou la tige filetée (17) est pourvu d'une rainure annulaire (38) dans laquelle est logée une douille filetée (41) qui est pourvue latéralement d'une fente (43) et qui est vissée dans le filetage (35).

2. Vis micrométrique selon la revendication 1, **caractérisée en ce que** la tige filetée (17) est en prise avec un filetage (22) maintenu de manière bloquée en rotation et fixe axialement par rapport à une carcasse.

3. Vis micrométrique selon la revendication 1 ou 2, **caractérisée en ce que** la tige filetée (17) est reliée à un dispositif de mesure (9) conçu pour détecter les tours de la tige filetée (17).

4. Vis micrométrique selon la revendication 1, **caractérisée en ce que** l'axe de mesure (4) est pourvu d'un perçage axial (34).

5. Vis micrométrique selon la revendication 4, **caractérisée en ce que** le perçage (34) est un perçage traversant avec un gradin (52).

6. Vis micrométrique selon la revendication 5, **caractérisée en ce qu'**une bille (51), qui prend appui contre le gradin (52), est insérée dans le perçage (34).

7. Vis micrométrique selon la revendication 6, **caractérisée en ce que** la bille (51) forme une surface de référence pour des inserts de mesure (53) de préférence interchangeables.

8. Vis micrométrique selon la revendication 4, **caractérisée en ce que** le perçage (34) est pourvu d'un filetage intérieur (35) à son extrémité tournée vers la tige filetée (17).

9. Vis micrométrique selon la revendication 1, **caractérisée en ce que** la tige filetée (17) présente, à la suite de l'axe de mesure (4), un diamètre extérieur qui correspond à celui de l'axe de mesure (4).

10. Vis micrométrique selon la revendication 4, **caractérisée en ce que** la tige filetée (17) présente un prolongement axial (36) qui s'étend à l'intérieur du perçage (34).

11. Vis micrométrique selon la revendication 10, **caractérisée en ce que** le prolongement (34) est en appui contre la bille (51).

12. Vis micrométrique selon la revendication 10, **caractérisée en ce que** la rainure annulaire (38) est formée sur le prolongement (34).

13. Vis micrométrique selon la revendication 1, **caractérisée en ce que** la fente (43) de la douille filetée (41) présente une largeur qui autorise une insertion latérale de la douille filetée (41) dans la rainure annulaire (38).

14. Vis micrométrique selon la revendication 13, **caractérisée en ce que** la fente (43) présente une largeur, mesurée dans le sens circonférentiel, qui est égale au diamètre intérieur de la rainure annulaire (38).

15. Vis micrométrique selon la revendication 13, **caractérisée en ce que** la fente (43) présente une largeur, mesurée dans le sens circonférentiel, qui est légèrement inférieure au diamètre intérieur de la rainure annulaire (38) pour permettre un encliquetage de la douille filetée (41) dans la rainure annulaire (38).

16. Vis micrométrique selon la revendication 1, **caractérisée en ce que** la douille filetée (41) est divisée dans la longueur.

17. Vis micrométrique selon la revendication 1, **caractérisée en ce qu'**un contre-écrou (44) est disposé sur la douille filetée (41).

18. Système de construction d'une vis micrométrique
comprenant une tige de mesure qui présente un axe de mesure (4), à monter sans possibilité de rotation, et une tige filetée (17) raccordée à celui-ci et reliée avec possibilité de rotation à l'axe de mesure (4) par l'intermédiaire d'un dispositif d'accouplement (18),
dans lequel, pour réaliser le dispositif d'accouplement (18), la tige filetée (17) ou l'axe de mesure (4) est pourvu d'un perçage axial (34) à filetage intérieur (35), et l'axe de mesure (4) ou la tige filetée (17) est pourvu d'une rainure annulaire (38) dans laquelle est logée une douille filetée (41) qui est pourvue latéralement d'une fente (43) et qui est vissée dans le filetage (35),
comprenant une tige de mesure dont l'axe de mesure (4) et la tige filetée (17) sont reliés rigidement l'un à l'autre, et
comprenant un corps de base (2) sur lequel est disposé un système de mesure conçu pour détecter une rotation de la tige de mesure et qui est pourvu d'un perçage traversant destiné à recevoir au choix l'une des tiges de mesure mentionnées ci-dessus.

19. Système de construction d'une vis micrométrique selon la revendication 18, **caractérisé en ce que** l'axe de mesure (4) monté ou à monter sans possibilité de rotation et la tige filetée (17) présentent le même diamètre extérieur et sont disposés en alignement axial l'un par rapport à l'autre et à la suite l'un de l'autre longitudinalement.
